# EUROPÄISCHE PATENTSCHRIFT

(11) **EP 2 251 140 B1**
(45) Veröffentlichungstag und Bekanntmachung des Hinweises auf die Patenterteilung: **20.09.2017**
(21) Anmeldenummer: 10162330.4
(22) Anmeldetag: 07.05.2010
(51) Int. Cl.: B24B 31/06, B24B 31/14, B24B 39/00, F01D 5/28

(54) **Verfahren zur Oberflächenverfestigung und -glättung von metallischen Bauteilen**
Method for solidifying and polishing the surface of metallic components
Procédé d'écrouissage et de polissage des surfaces de composants métalliques

(30) Priorität: 15.05.2009 DE 102009021582
(43) Veröffentlichungstag der Anmeldung: 17.11.2010
(73) Patentinhaber: Rolls-Royce Deutschland Ltd & Co KG, 15827 Blankenfelde-Mahlow (DE)
(72) Erfinder: Hennig, Wolfgang, 61267 Neu-Anspach (DE); Haubold, Thomas, 61273, Wehrheim (DE); Kyrylov, Oleksandr, 60433, Frankfurt/Main (DE); Feldmann, Goetz G., 61440, Oberursel (DE)
(74) Vertreter: Kronthaler, Schmidt & Coll.

(56) Entgegenhaltungen:
- EP-A1- 0 976 496
- EP-A1- 1 731 262
- FR-A5- 2 161 263
- GB-A- 191 229 418
- GB-A- 191 422 241

## Beschreibung

Die Erfindung betrifft ein Verfahren zur Oberflächenverfestigung und -glättung von metallischen Bauteilen, insbesondere von Rotoren oder Rotortrommeln mit integraler Beschaufelung für Flugtriebwerke, und einen zur Durchführung des Verfahrens ausgebildeten Verfestigungskörper.

Die Rotoren von Gasturbinen, insbesondere Flugtriebwerken, sind während des Betriebes insbesondere im Schaufelbereich hoch beansprucht. Zur Verringerung der dadurch bedingten Verschleißerscheinungen und zur Erhöhung der Wechselfestigkeit ist es bekannt, die Oberfläche der Rotoren im Schaufelbereich durch Kugelstrahlen zu verfestigen. Dabei werden mit Druckluft beschleunigte Stahl- oder Keramikkugeln mit hoher Geschwindigkeit und über Düsen auf die insbesondere im Schaufelbereich einem hohen Verschleiß unterliegenden, zu verfestigenden Oberflächenabschnitte geschleudert. Andere bekannte Verfahren zur Oberflächenverfestigung sind das Ultraschallstrahlen, das Lasershockpeening oder das Rollen.

Um den mit der abschnittsweisen Oberflächenverfestigung durch Kugelstrahlen verbundenen hohen apparativen und zeitlichen Aufwand zu verringern, schlägt die EP 1731262 A1 vor, das an der Oberfläche zu verfestigende Bauteil in einen mit Strahlkugeln gefüllten und eine Taumelbewegung ausführenden Behälter einzubringen. Aufgrund der durch die Taumelbewegung erzeugten Relativbewegung zwischen dem sich mit dem Behälter bewegenden Werkstück und den Strahlkugeln schlagen die Kugeln an die Oberfläche des Werkstücks an und bewirken deren Verfestigung.

Eine neben der Oberflächenfestigkeit weitere wichtige Anforderung an die Oberfläche der Rotoren von Flugtriebwerken ist darüber hinaus deren zur Erzielung guter aerodynamischer Eigenschaften und eines möglichst hohen Wirkungsgrades des Triebwerks minimale Rauhigkeit. Mit dem Kugelstrahlverfestigen ist jedoch eine deutliche Erhöhung der Oberflächenrauheit verbunden, die den im Hinblick auf die Effizienz des Triebwerks gestellten Anforderungen nicht genügt und eine anschließende, mit erheblichem Arbeits- und Anlagenaufwand verbundene Schleif- und Polierbehandlung zur Oberflächenglättung erforderlich macht. Der Erfindung liegt die Aufgabe zugrunde, ein Verfahren zur Oberflächenverfestigung und -glättung von metallischen Bauteilen, insbesondere Rotoren mit integraler Beschaufelung für Flugtriebwerke, anzugeben, dass mit geringem zeitlichem und apparativem Aufwand sowohl eine Verfestigung als auch eine Glättung der durch das Aufschlagen der Kugeln zwar verfestigten, aber gleichzeitig aufgerauhten Werkstückoberfläche bewirkt. Erfindungsgemäß wird die Aufgabe mit einem Verfahren gemäß den Merkmalen des Patentanspruchs 1 sowie entsprechend dem Verfahren ausgebildeten Verfestigungskörpern gemäß Anspruch 3 gelöst. Vorteilhafte Weiterbildungen der Erfindung sind Gegenstand der Unteransprüche.

Bei der Oberflächenverfestigung und -glättung von metallischen Bauteilen, insbesondere von Rotoren oder Rotortrommeln mit integraler Beschaufelung für Flugtriebwerke, werden die sich in einem mit Verfestigungskörpern gefüllten, eine Rüttelbewegung ausführenden Aufnahmebehälter befindenden Bauteile durch eine senkrecht und waagerecht kreisende sowie vibrierende Bewegung der Verfestigungskörper verfestigt und in demselben Arbeitsschritt wird die durch die verfestigte Oberfläche auch geglättet.

Die gleichzeitige Verfestigung und Glättung der Werkstückoberfläche gelingt aufgrund einer spezifischen Gestaltung der relativ zur Werkstückoberfläche bewegten Verfestigungskörper, die einen die Oberflächenverfestigung bewirkenden kreis- oder ellipsenförmig umlaufenden, abgerundeten Kantenbereich oder Druckverfestigungsbereich und einen von diesem beidseitig ausgehenden, flach gewölbten Glättbereich zur Glättung der Oberfläche aufweisen. Die Werkstücke, wie zum Beispiel eine aus mehreren Rotoren mit integraler Beschaufelung zusammengesetzte Rotortrommel für ein Flugtriebwerk, können somit in ein und derselben Vorrichtung in einem Arbeitsgang mit zeitlich und apparativ geringem Aufwand verfestigt und sofort geglättet werden und verfügen über eine hohe Wechselfestigkeit und vorteilhafte aerodynamische Eigenschaften.

Die Verfestigungskörper weisen zur Erzeugung der zur Verfestigung und Glättung erforderlichen kinetischen Energie eine auf die ihnen erteilte Bewegung abgestimmte Masse auf. Durch ihre abgeflachte Gestaltung gelangen die Verfestigungskörper trotz des vergleichsweise großen Volumens auch in enge Werkstückbereiche. Oberflächenbereiche des Werkstücks, die nicht verfestigt werden sollen, werden während der Behandlung abgedeckt.

Die zur Durchführung des Verfahrens vorgesehenen erfindungsgemäßen Verfestigungskörper weisen einen kreis- oder ellipsenförmig umlaufenden, abgerundeten Kantenbereich bzw. Druckverfestigungsbereich und einen von diesem beidseitig ausgehenden, flach gewölbten Glättbereich auf.

Der umlaufende Druckverfestigungsbereich bildet im Querschnitt einen Kreisabschnitt mit geringem Radius und der Glättbereich bildet einen Kugelabschnitt mit einem um ein Vielfaches größeren Radius. Gemäß Anspruch 3 sind die Verfestigungskörper als Kugeln mit angeformtem, umlaufendem Ring ausgebildet, wobei eine abgerundete freie Kante des Ringes den Druckverfestigungsbereich bildet und die beiden freien Kugelflächen den Glättbereich bilden. Gemäß Anspruch 3 sind die Verfestigungskörper alternativ als abgeflachte Kugeln ausgebildet, deren umlaufender Kantenbereich mit kleinem Radius den Druckverfestigungsbereich bildet und deren beidseitig von den Kanten ausgehende gegenüberliegende Bereiche mit großem Radius die Glättbereiche bilden.

In Ausgestaltung der Erfindung sind die Verfestigungskörper linsenförmig ausgebildet.

In Ausgestaltung der Erfindung sind die Verfestigungskörper diskusförmig ausgebildet.

In weiter Ausgestaltung der Erfindung bestehen die Verfestigungskörper aus rostfreiem Stahl.

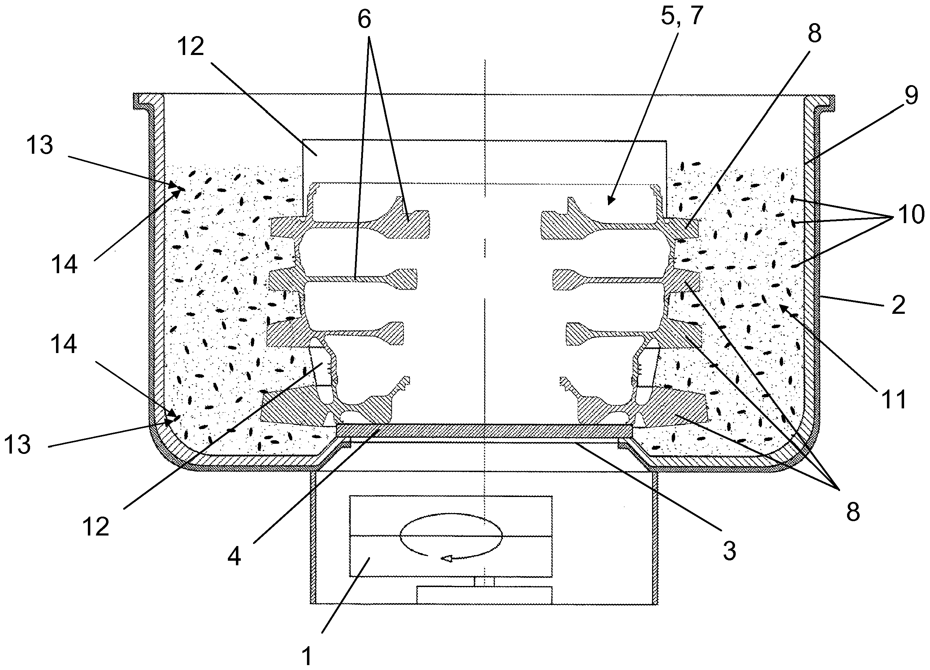

Ein Ausführungsbeispiel der Erfindung wird anhand der Zeichnung, deren einzige Figur eine zur Druckverfestigung und zur zeitgleichen Glättung der durch den Kugeldruck aufgerauten Oberfläche ausgebildete Vorrichtung zeigt, näher erläutert.

Die Zeichnung zeigt einen mit einem Unwuchtmotorantrieb 1 verbundenen Aufnahmebehälter 2 mit einem mittig angeordneten Sockel 3 und einer auf diesem angeordneten Auflageplatte 4, auf der das zu bearbeitende Werkstück 5 gehalten ist. Das Werkstück 5 ist eine aus mehreren miteinander verschweißten, integral beschaufelten Rotoren 6 (Blisks) zusammengesetzte Rotortrommel 7, deren im Betrieb einem Luft- bzw. Heißgasstrom ausgesetzte Oberflächen, insbesondere die Schaufelflächen und die zwischen den Schaufeln 8 verbleibenden Oberflächen, zur Erzielung einer hohen Wechselfestigkeit durch Kugeldruck verfestigt werden sollen und dennoch eine zur Verbesserung der aerodynamischen Eigenschaften und des Wirkungsgrads der Turbomaschine notwendige geringe Oberflächenrauheit aufweisen sollen. Der mit einer Schutzschicht 9 ausgekleidete Aufnahmebehälter 2 ist bis auf eine oberhalb der Rotortrommel 7 liegende Höhe mit einem aus einer Vielzahl von Verfestigungs- und Glättkörpern 10 bestehenden Behandlungsmittel 11 gefüllt. Die in der Zeichnung dargestellten Verfestigungs- und Glättkörper 10 sind hier wegen der besseren Anschaulichkeit vergrößert wiedergegeben. Wie die Zeichnung zeigt, können bestimmte Abschnitte des Werkstücks 5, hier der Rotortrommel 7, deren Oberfläche nicht behandelt werden soll bzw. zu denen die Verfestigungs- und Glättkörper 10 nicht gelangen sollen, mit Abdeckelementen 12 abgedeckt sein.

Ein wesentliches Merkmal der in dem Aufnahmebehälter 2 befindlichen Verfestigungskörper 10 besteht in deren - gegenüber den beim Kugelstrahlen verwendeten, mit Druckluft beschleunigten Strahlkugeln - erheblich größerer Masse. Diese große Masse ist erforderlich, um trotz der allein durch die Rüttelbewegung des Aufnahmebehälters 2 und des Werkstücks 5 erzielten Vibration und kreisförmigen Bewegung der Verfestigungs- und Glättkörper 10 und deren gegenüber dem Kugelstrahlen vergleichsweise geringer Beschleunigung die erforderliche kinetische Energie zur Kugeldruckverfestigung der Werkstückoberfläche aufzubringen. Diese große Masse erhält man im Wesentlichen dadurch, dass die Verfestigungs- und Glättkörper 10 eine im Wesentlichen ovale Querschnittsform oder Linsenform aufweisen. Die Druckverfestigung wird durch das Aufschlagen der Kantenbereiche bzw. Druckverfestigungsbereich 13 mit entsprechend kleinem Radius (entspricht beispielsweise einen Kugeldurchmesser von 0,8 mm)) der Verfestigungs-und Glättkörper 10 erzielt, während die auf die derart verfestigte, aber aufgeraute Oberfläche des Werkstücks 5 auftreffenden großen Radiusbereiche bzw. Glättbereiche 14 in ein und demselben Prozess eine Oberflächenglättung der durch das Kugeldruckverfestigen rauen Oberfläche bewirken. Nach dem Verfestigen und Glätten können beispielsweise für die Aerodynamik und damit die Effizienz des Triebwerks vorteilhafte Rauheiten von unter 0,25µm [Ra] erzielt werden.

Neben der relativ hohen Masse besteht somit ein wichtiges Merkmal der gleichzeitig als Glättkörper wirkenden Verfestigungskörper 10 in der Ausbildung von etwa halbkreisförmigen Druckverfestigungsbereichen 13 und diesen gegenüber nahezu flachen Glättbereichen 14, die jedenfalls einen weitaus größeren Radius haben. Die Verfestigungskörper 10 können beispielsweise linsen- oder diskusförmig sein oder im Querschnitt der Form des Planeten Saturn nachempfundene satellitenförmige Körper sein. Die gegenüber den herkömmlichen Strahlkugeln deutlich größere, aber flache Querschnittsform der Verfestigungskörper 10 gewährleistet trotz deren größeren Volumens, dass die Verfestigungskörper 10 auch in enge Zwischenräume gelangen und dort zur Druckverfestigung in Kombination mit einer Glättung der Werkstückoberfläche wirksam sein können.

### Bezugszeichenliste

- 1: Unwuchtmotorantrieb
- 2: Aufnahmebehälter
- 3: Sockel
- 4: Auflageplatte
- 5: Werkstück
- 6: Rotor mit integraler Beschaufelung
- 7: Rotortrommel
- 8: Schaufeln
- 9: Schutzschicht
- 10: Verfestigungskörper, Glättkörper
- 11: Behandlungsmittel
- 12: Abdeckelement
- 13: Druckverfestigungsbereich, Kantenbereich
- 14: Glättbereich

## Patentansprüche

1. Verfahren zur Oberflächenverfestigung und -glättung von metallischen Bauteilen, insbesondere von Rotoren oder Rotortrommeln mit integraler Beschaufelung für Fluggasturbinen, bei dem die sich in einem mit Verfestigungskörpern gefüllten, eine Rüttelbewegung ausführenden Aufnahmebehälter befindenden Bauteile durch eine Relativbewegung zwischen der Bauteiloberfläche und den Verfestigungskörpern verfestigt und geglättet werden, **dadurch gekennzeichnet, dass** die Werkstückoberfläche aufgrund einer spezifischen Gestaltung der relativ zur Werkstückoberfläche bewegten Verfestigungskörper in einem Arbeitsschritt verfestigt und geglättet wird, indem Verfestigungskörper (10) eingesetzt werden, die einen die Oberflächenverfestigung bewirkenden umlaufenden, abgerundeten Kantenbereich oder Druckverfestigungsbereich (13) und einen von diesem beidseitig ausgehenden, flach gewölbten Glättbereich (14) zur Glättung der durch die Verfestigung aufgerauten Oberfläche aufweisen und Oberflächenbereiche des Werkstücks, die nicht verfestigt werden sollen, während der Behandlung abgedeckt werden.

2. Verfahren nach Anspruch 1, **dadurch gekennzeichnet, dass** die Verfestigungskörper zur Erzeugung der zur Verfestigung und Glättung erforderlichen kinetischen Energie eine horizontal und vertikal kreisende sowie eine vibrierenden Bewegung ausführen und eine darauf abgestimmte Masse aufweisen, wobei die Verfestigungskörper durch eine abgeflachte Gestaltung auch in enge Werkstückbereiche gelangen.

3. Verfestigungskörper zur Durchführung des Verfahrens nach Anspruch 1, **gekennzeichnet durch** einen kreis- oder ellipsenförmig umlaufenden, abgerundeten Kantenbereich oder Druckverfestigungsbereich (13) und einen von diesem beidseitig ausgehenden, flach gewölbten Glättbereich (14), wobei die Verfestigungskörper (10) als Kugeln mit angeformtem, umlaufendem Ring ausgebildet sind und jeweils eine abgerundete freie Kante des Ringes den Druckverfestigungsbereich (13) bildet und die beiden freien Kugelflächen den Glättbereich (14) bilden oder die Verfestigungskörper (10) als abgeflachte Kugeln ausgebildet sind, deren umlaufende Kantenbereiche mit kleinem Radius jeweils den Druckverfestigungsbereich (13) und deren gegenüberliegende Bereiche mit großem Radius die Glättbereiche (14) bilden.

4. Verfestigungskörper nach Anspruch 3, **dadurch gekennzeichnet, dass** der Druckverfestigungsbereich (13) im Querschnitt einen Kreisabschnitt mit geringem Radius bildet und die Glättbereiche (14) Kugelabschnitte mit einem um eine Vielfaches größeren Radius bilden.

5. Verfestigungskörper nach Anspruch 3 oder 4, **dadurch gekennzeichnet, dass** sie linsenförmig ausgebildet sind.

6. Verfestigungskörper nach Anspruch 3 oder 4, **dadurch gekennzeichnet, dass** sie diskusförmig ausgebildet sind.

7. Verfestigungskörper nach Anspruch 3, **dadurch gekennzeichnet, dass** sie aus rostfreiem Stahl bestehen.

## Claims

1. Method for surface strengthening and smoothening of metallic components, in particular of rotors or rotor drums with integral blading for aircraft gas turbines, in which the components loaded in a vessel which is filled with strengthening elements and performs a tumbling movement, are strengthened and smoothened by a relative movement between the workpiece surface and the strengthening elements, **characterized in that**, due to a specific shape of the strengthening elements moved relative to the workpiece surface, the workpiece surface is strengthened and smoothened in one process step using strengthening elements (10) having a circumferential, rounded edge area, or compressive strengthening area (13) for strengthening the surface, and, extending therefrom on both sides, a flatly curved smoothening area (14) for smoothening the surface roughened by strengthening, and that surface areas of the workpiece which are not to be strengthened are masked during the treatment.

2. Method in accordance with Claim 1, **characterized in that** for producing the kinetic energy required for strengthening and smoothening, the strengthening elements perform horizontally and vertically circulating as well as vibrating movements and have a mass adjusted to these movements, with the strengthening elements owing to their flattened shape also accessing confined workpiece areas.

3. Strengthening elements for the performance of the method in accordance with Claim 1, **characterized by** a circularly or elliptically circumferential, rounded edge area or compressive strengthening area (13), and, extending therefrom on both sides, a flatly curved smoothening area (14), where the strengthening elements (10) are provided as spheres with formed-on, circumferential ring, with a rounded free edge of the ring forming the compressive strengthening area (13) and the two free spherical surfaces forming the smoothening area (14), or the strengthening elements (10) are provided as flattened spheres whose circumferential small-radius edge areas form the compressive strengthening area (13) and whose opposite large-radius areas form the smoothening areas (14).

4. Strengthening elements in accordance with Claim 3, **characterized in that** the compressive strengthening area (13) cross-sectionally forms a circle segment with small radius, while the smoothening areas (14) form spherical segments with a many times larger radius.

5. Strengthening elements in accordance with Claim 3 or 4, **characterized in that** they are lenticular.

6. Strengthening elements in accordance with Claim 3 or 4, **characterized in that** they are disk-shaped.

7. Strengthening elements in accordance with Claim 3, **characterized in that** they are made of stainless steel.

## Revendications

1. Procédé pour le durcissement et le lissage superficiels de composants métalliques, notamment de rotors ou de tambours de rotor avec aubage intégral pour des turbines à gaz aéronautiques, lors duquel les composants se trouvant dans un réceptacle vibrant et rempli de corps durcisseurs sont durcis et lissés par un mouvement relatif entre la surface des composants et les corps durcisseurs, **caractérisé en ce qu'**en raison d'une conception spécifique des corps durcisseurs déplacés relativement par rapport à la surface des pièces d'oeuvre, la surface des pièces d'oeuvre est durcie et lissée lors d'une étape de travail en utilisant des corps durcisseurs (10) qui présentent une zone de bord circonférentielle arrondie ou zone de durcissement par pression (13) entraînant le durcissement superficiel et une zone de lissage (14) légèrement bombée, partant de celle-ci et s'étendant des deux côtés, destinée à lisser la surface égratignée par le durcissement et que les zones superficielles de la pièce d'oeuvre qui ne doivent pas être durcies sont recouvertes pendant le traitement.

2. Procédé selon la revendication n° 1, **caractérisé en ce que** les corps durcisseurs destinés à produire l'énergie cinétique nécessaire au durcissement et au lissage effectuent un mouvement circulaire horizontal et vertical ainsi qu'un mouvement vibratoire et présentent une masse adaptée à cela, sachant que les corps durcisseurs parviennent même dans des zones étroites des pièces d'oeuvre grâce à leur conception aplatie.

3. Corps durcisseurs pour réaliser le procédé selon la revendication n° 1, **caractérisés par** une zone de bord circonférentielle arrondie en forme de cercle ou d'ellipse ou une zone de durcissement par pression (13) et une zone de lissage (14) légèrement bombée, partant de celle-ci et s'étendant des deux côtés, sachant que les corps durcisseurs (10) sont constitués de billes avec anneau circonférentiel intégral et que, sur chaque bille, un bord libre arrondie de l'anneau forme la zone de durcissement par pression (13) et que les deux surfaces libres de la bille forment la zone de lissage (14) ou que les corps durcisseurs (10) sont constitués de billes aplaties dont les zones de bord circonférentielles de petit rayon forment la zone de durcissement par pression (13) et dont les zones opposées de grand rayon forment les zones de lissage (14).

4. Corps durcisseurs selon la revendication n° 3, **caractérisés en ce que** la zone de durcissement par pression (13) forme en coupe une section circulaire de petit rayon et que les zones de lissage (14) forment des sections sphériques d'un rayon bien supérieur.

5. Corps durcisseurs selon la revendication n° 3 ou n° 4, **caractérisés en ce qu'**ils ont la forme de lentilles.

6. Corps durcisseurs selon la revendication n° 3 ou n° 4, **caractérisés en ce qu'**ils ont la forme de disques.

7. Corps durcisseurs selon la revendication n° 3, **caractérisés en ce qu'**ils sont constitués d'acier inoxydable.
